# DEMANDE DE BREVET EUROPEEN

(11) **EP 0 610 117 A1**
(43) Date de publication de la demande: **10.08.1994**
(21) Numéro de dépôt: 94400182.5
(22) Date de dépôt: 28.01.1994
(51) Int. Cl.: F02M 35/08, F01N 5/04, F01N 7/08

(54) **Dispositif épurateur d'air comburant pour moteur à combustion interne**

(30) Priorité: 05.02.1993 FR 9301279
(71) Demandeur: RENAULT VEHICULES INDUSTRIELS Société Anonyme dite:, F-69003 Lyon (FR)
(72) Inventeur: Michel, Bernard, F-69390 Venaison (FR)
(74) Mandataire: Ernst-Schonberg, Michel

(57) **Abrégé**

Dispositif épurateur (2) permettant l'évacuation, dans une tubulure d'échappement (1) d'un moteur à combustion interne, de particules de poussières contenues dans l'air comburant de ce moteur, caractérisé en ce qu'il comprend dans le sens de l'écoulement des particules de poussières, un tube (3) pénétrant dans la tubulure d'échappement (1), un coude (4), un divergent (5) et une partie cylindrique (6) dans laquelle est disposé un clapet anti-retour (8).

## Description

La présente invention concerne un dispositif épurateur d'air comburant pour moteur à combustion interne. L'invention concerne plus particulièrement un dispositif épurateur pour moteur à combustion, permettant l'évacuation dans la tubulure d'échappement de ce moteur des particules de poussières contenues dans l'air comburant.

L'air comburant est prélevé à l'extérieur du moteur puis filtré avant son introduction dans le moteur. Dans le cas d'un filtre cyclonique les particules de poussières retenues par le filtre sont évacuées directement dans la tubulure d'échappement.

Les dispositifs épurateurs actuellement utilisés sur les véhicules routiers équipés d'un filtre cyclonique comprennent donc un ensemble convergent-divergent installé dans la tubulure d'échappement du moteur, et un tuyau raccordé, à une extrémité au filtre cyclonique, et à son autre extrémité à un orifice situé environ à la jonction entre le convergent et le divergent, et perpendiculairement à la tubulure d'échappement.

Les particules de poussières sortent donc de cet orifice perpendiculairement à la tubulure d'échappement, puis elles changent de direction à 90°, car elles sont entraînées dans le divergent par les gaz d'échappement s'écoulant également dans le sens convergent-divergent.

De tels dispositifs épurateurs ne sont pas très performants, car la dépression créée dans le divergent ne permet pas une aspiration complète des particules de poussières contenues dans le filtre cyclonique.

La présente invention a pour but d'améliorer l'efficacité de l'aspiration tout en diminuant le coût de fabrication. Pour ce faire, le dispositif épurateur selon l'invention comporte un divergent réservé uniquement aux particules de poussières, les gaz d'échappement passant dans l'espace laissé libre entre la paroi externe du divergent et la paroi interne de la tubulure d'échappement. La réduction de la section de passage des gaz d'échappement, obtenue par la mise en place du divergent, crée en aval de celui-ci, une dépression qui facilite l'aspiration des particules de poussières. En outre, ce divergent réservé est raccordé à un simple coude, ce qui permet de monter un tel dispositif d'aspiration sur les tubulures d'échappement existantes.

La présente invention a pour objet un dispositif épurateur permettant l'évacuation, dans une tubulure d'échappement d'un moteur à combustion interne, des particules de poussières contenues dans l'air comburant de ce moteur.

Selon l'invention, ce dispositif épurateur est constitué successivement, dans le sens de l'écoulement des poussières, d'un tube pénétrant dans la tubulure d'échappement, d'un coude et d'un divergent. Les gaz d'échappement traversent, dans le même sens d'écoulement que les particules de poussières, le passage laissé libre entre la paroi externe du divergent et la paroi interne de la tubulure d'échappement. Le dispositif épurateur est de plus caractérisé en ce qu'une soupape anti-retour est agencée à l'extrémité du divergent de façon à empêcher toute recirculation des gaz d'échappement vers le filtre cyclonique.

On comprendra mieux les buts, aspects et avantages de la présente invention, d'après la description donnée ci-après d'un mode de réalisation de l'invention, présenté à titre d'exemple non limitatif, en se référant au dessin annexé, dans lequel :
- la figure 1 est une vue partielle en coupe longitudinale du dispositif épurateur selon l'invention ;
- la figure 2 est une vue partielle du dispositif épurateur selon la direction II de la figure 1.

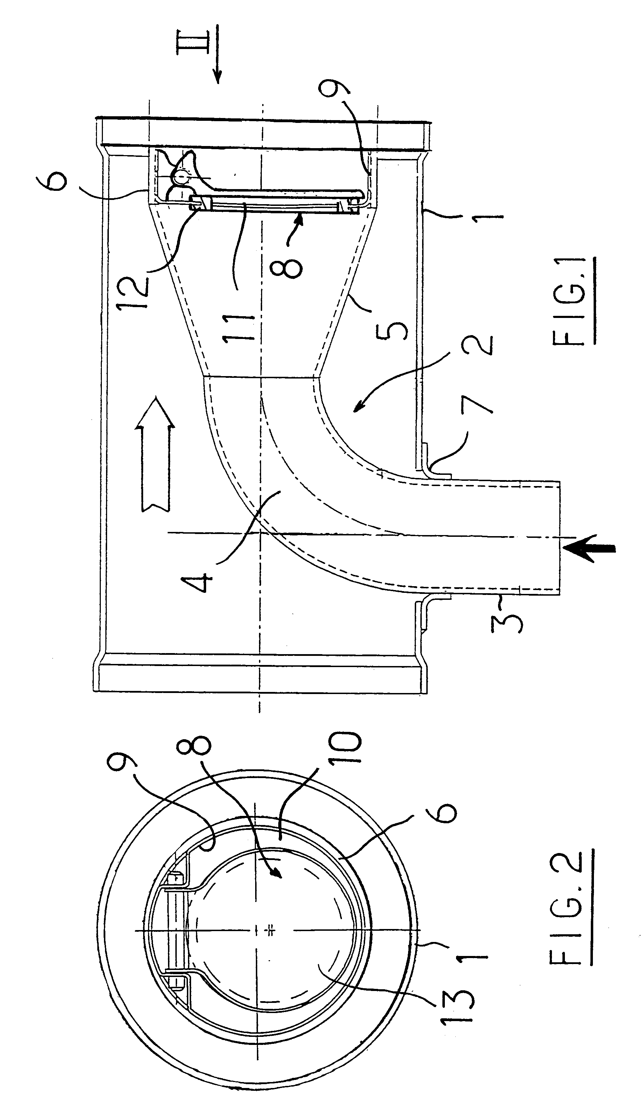

Conformément à la figure 1, seules les parties constitutives nécessaires à la compréhension de l'invention ont été représentées.

Dans la figure 1 sont représentés une tubulure d'échappement 1 formée par un conduit de section circulaire, et un dispositif épurateur de l'air comburant du moteur dont seul a été figuré le système de transfert 2 à l'échappement des poussières recueillies par filtration cyclonique.

Le système de transfert 2 est constitué successivement d'un tube 3, d'un coude 4, d'un divergent 5 et d'une partie cylindrique 6 dans laquelle est logé un clapet anti-retour 8. Ces différentes parties du dispositif épurateur sont généralement réalisées en tôle et sont reliées entre elles par tout moyen classique tel que par exemple la soudure.

Le tube 3 traverse la paroi de la tubulure 1 et dans cet exemple de réalisation, il s'étend perpendiculairement à l'axe longitudinal de cette tubulure. Le tube 3 est raccordé à la tubulure 1 par l'intermédiaire d'une collerette rapportée 7 soudée respectivement au tube 3 et à la tubulure 1. Le divergent 5 et la partie cylindrique 6 sont, dans cet exemple de réalisation, coaxiaux à la tubulure 1. Suivant ce montage, les gaz d'échappement traversent, dans le même sens d'écoulement que les particules de poussières, le passage laissé libre entre la paroi externe du divergent et la paroi interne de la tubulure d'échappement.

Les figures 1 et 2 précisent la réalisation du clapet anti-retour 8 disposé dans la partie cylindrique 6. Ce clapet 8 comprend un corps cylindrique 9, de diamètre correspondant à la partie 6 pour opérer un ajustement serré du corps 9 dans cette partie cylindrique 6, présentant une paroi de fond 10 dans laquelle est ménagée une ouverture centrale circulaire 11 entourée d'un joint 12 résistant à la température. Un opercule 13 correspondant à cette ouverture 11 est articulé sur le corps 9 pour venir reposer contre le joint 12 formant le siège du clapet et obturer le passage des gaz. Lors du montage du clapet 8 dans la partie cylindrique 6, ce dernier est positionné de façon à placer l'articulation de l'opercule 13 au-dessus de l'ouverture 11 de façon à assurer la fermeture du clapet par simple gravité sans nécessiter de système élastique de rappel.

L'utilisation du clapet anti-retour 8 à l'extrémité du divergent 5 permet d'éviter toute recirculation intempestive des gaz d'échappement dans le système de transfert 2. Le positionnement du clapet 8 à l'extrémité du divergent 5 permet un montage et une orientation aisés de ce dernier, de plus il permet de réduire les exigences en terme de résistance à la température portant sur les conduits 3, 4 et 5 et donc d'en réduire le coût.

Bien entendu, l'invention n'est nullement limitée au mode de réalisation décrit et illustré qui n'a été donné qu'à titre d'exemple.

Au contraire, l'invention comprend tous les équivalents techniques des moyens décrits ainsi que leurs combinaisons si celles-ci sont effectuées suivant son esprit.

## Revendications

**[1]** Dispositif épurateur (2) permettant l'évacuation, dans une tubulure d'échappement (1) d'un moteur à combustion interne, de particules de poussières contenues dans l'air comburant de ce moteur, caractérisé en ce qu'il comprend dans le sens de l'écoulement des particules de poussières, un tube (3) pénétrant dans la tubulure d'échappement (1), un coude (4), un divergent (5) et un clapet anti-retour (8).

**[2]** Dispositif épurateur (2) selon la revendication 1, caractérisé en ce que le divergent (5) est prolongé, dans le sens de l'écoulement des particules de poussières par une partie cylindrique (6) dans laquelle est disposé le clapet anti-retour (8).

**[3]** Dispositif épurateur (2) selon l'une quelconque des revendications 1 à 2, caractérisé en ce que le tube (3) est placé perpendiculairement à la tubulure d'échappement (1) et en ce que l'axe du divergent (5) est parallèle à l'axe de la tubulure d'échappement (1).

**[4]** Dispositif épurateur (2) selon la revendication 3, caractérisé en ce que l'axe du divergent (5) et l'axe de la tubulure d'échappement (1) sont confondus.

**[5]** Dispositif épurateur (2) selon l'une quelconque des revendications 1 à 4, caractérisé en ce que le clapet anti-retour (8) comprend un corps (9) dans lequel est agencée une ouverture (11) et sur lequel est articulé un opercule (13) et en ce que le clapet anti-retour (8) est positionné à l'intérieur de la partie cylindrique 6 de façon à disposer l'articulation de l'opercule (13) au dessus de l'ouverture (11).
